# EUROPEAN PATENT APPLICATION

(11) **EP 4 169 391 A1**
(43) Date of publication of application: **26.04.2023**
(21) Application number: 21204468.9
(22) Date of filing: 25.10.2021
(51) Int. Cl.: A23L 11/30

(54) **METHOD OF PREPARING A CROP-BASED COMPOSITION**

(71) Applicant: The Green Dairy Sweden Holding AB, 374 31 Karlshamn (SE)
(72) Inventor: BERGGREN SÖDERLUND, Gunilla Anna Maria, 222 74 LUND (SE); ANDERSSON, Kenneth Lars-Olof, 247 35 SÖDRA SANDBY (SE); FUNETEG, Bo Åke Ingolf, 293 91 OLOFSTRÖM (SE); LINDVALL, Kent Inge Stephan, 216 13 LIMHAMN (SE); SJÖBERG, Klas Göran, 217 48 MALMÖ (SE); SÖDERLUND, Bengt Patrik, 222 74 LUND (SE)
(74) Representative: Brann AB

(57) **Abstract**

1. A method of preparing a liquid crop-based composition for use as a food is provided, the method comprising the steps of: i) rinsing a crop, such as fava beans, comprising at least one antinutritive compound, with an aqueous liquid for a first time period, wherein the aqueous liquid has a temperature of 50-90°C, such as 50-70°C, such as 60°C, ii) disintegrating the rinsed crop, such as by milling or crushing, and mixing with an aqueous liquid to obtain a liquid crop-based composition, iii) subjecting the liquid crop-based composition to an amylase so as to at least partially degrade starch in the liquid crop-based composition, and iv) subjecting the liquid crop-based composition to a betaglucosidase under first dosage, time and temperature conditions so as to reduce the content of the at least one antinutritive compound. A liquid crop-based composition obtained by the method as well as methods of producing food compositions using the liquid crop-based composition and food compositions thus produced are also disclosed.

## Description

### TECHNICAL FIELD

The technology proposed herein relates to the field of methods of preparing liquid crop-based compositions that contain less antinutritive components. More particularly, the technology proposed herein relates to the field of methods for preparing liquid crop-based compositions having a decreased content of substances which, when ingested as part of the liquid crop-based composition, causes or may cause adverse reactions, such as favism, i.e., acute haemolysis.

### BACKGROUND

Glucose-6-phosphate dehydrogenase deficiency (G6PDD) (favism) is an inborn error of metabolism that predisposes to red blood cell breakdown. Following a specific trigger, symptoms such as yellowish skin, dark urine, shortness of breath, and feeling tired may develop. Complications can include inter alia anemia. This disorder is an X-linked recessive disorder resulting in a defective glucose-6-phosphate dehydrogenase enzyme and the red blood cell breakdown may be triggered by infections, certain medication, or in particular ingestion of fava beans. In addition to fava beans, also other crops may contain antinutritive components which when ingested may lead to discomfort or disease.

It is estimated that around 400 million people have G6PDD worldwide, and the condition is particularly common in parts of Africa, Asia, the Middle East, and the Mediterranean.

The degree of deficiency varies between different individuals, spanning from those who are asymptotic, who do not suffer the red blood cell breakdown, to those who are symptomatic, i.e., who suffer the red cell breakdown and the associated hemolytic condition.

There are several types of crops that may cause favism. As suggested by the name *favism,* the fava bean (*Vicia faba*), also called broad bean or faba bean, is one type of food that can trigger the breakdown of red blood cells in individuals with G6PDD. The fava bean is a species of flowering plants in the bean and pea family. This bean is cultivated widely around the world for human consumption and can be consumed raw or cooked. Fava beans are rich in carbohydrates (58 %) and protein (26 %) and further contain considerable amounts of vitamins and minerals.
It has been suggested that the compounds vicine and convicine, and their degradation products divicine and isouramil (these compounds being capable of creating oxidants in the red blood cells) found in fava beans are responsible for the hemolytic reaction in an individual having G6PDD when ingesting fava beans.

Accordingly, attempts have been made to obtain variants or cultivars of fava bean having low concentrations of vicine and convicine. One such cultivar is called Divine and is bred from a Greek FB cultivar (line 1268) having a spontaneous mutant allele of the vicine/convicine gene. The Divine cultivar contains 0.16 g vicine and convicine per kg wet weight, as compared to the typical value of 4.75 g vicine and convicine per kg wet weight for general fava bean cultivars, as noted in Duc G, Sixdenier G, Lila M and Furstoss V: Search of genetic variability for vicine and convicine content in *Vicia faba* L. A first report of a gene which codes for nearly zero-vicine and zero-convicine contents. In: Huisman J, van der Poel AFB, Liener IE, eds.: Recent Advances of Research in Antinutritional Factors in Legume Seeds. Wageningen, The Netherlands: Pudoc; 1989:305-313.
The Divine cultivar has further been proven to be safe to consume, as found in Gallo V, Skorokhod, O A, Simula L F, Marrocco T, Tambini E, Schwarzer E, Marget P, Duc G and Arese P: "No red blood cell damage and no hemolysis in G6PD-deficient subjects after ingestion of low vicine/convicine after Vicia faba seeds. Blood 5 APRIL 2018 | VOLUME 131, NUMBER 14; 1621-1625.

Thus, while the nutritious properties and global spread would motivate further cultivation and use of crops such as fava beans, the toxicity and risk it poses to individuals with G6PDD, many of which may not know that they have the condition until exposed to crops containing G6PDD triggers, provide a barrier to such further use.

As noted above, also other antinutritive components, such as enzyme inhibitors (inhibiting digestive enzymes) such as trypsin inhibitor, hemagglutinins, saponins, phytic acid, can cause adverse reactions, disease or discomfort if consumed.

Accordingly, it is an object of the technology proposed herein to provide a method by which a liquid crop-based composition, i.e. a composition comprising crops such as fava beans, is prepared so as to decrease its content of antinutritive components, for example for at least lessen the risk that it triggers a hemolytic reaction when consumed by an individual suffering from G6PDD.

More particularly, it is an object of the technology proposed herein to provide a method by which the content of at least one of the compounds vicine and convicine is reduced as compared to the corresponding content in the non-processed crop.

Further objects of the technology proposed herein relate to the provision of food products comprising a liquid crop-based composition, as well as methods of producing the food products.

### SUMMARY

At least one of the above-mentioned objects are, according to the first aspect of the technology proposed herein achieved by a method of preparing a liquid crop-based composition for use as a food, the method comprising the steps of:
i) rinsing a crop, such as fava beans, comprising at least one antinutritive compound, with an aqueous liquid for a first time period, wherein the aqueous liquid has a temperature of 50-90°C, such as 50-70°C, such as 60°C,
ii) disintegrating the rinsed crop, such as by milling or crushing, and mixing with an aqueous liquid to obtain a liquid crop-based composition,
iii) subjecting the liquid crop-based composition to an amylase so as to at least partially degrade starch in the liquid crop-based composition, and
iv) subjecting the liquid crop-based composition to a betaglucosidase under first dosage, time, and temperature conditions so as to reduce the content of the at least one antinutritive compound.

The technology proposed herein is thus based on the realization that rinsing of a crop with warm aqueous liquid, having temperature of 50-90°C, combined with an enzymation using a betaglucosidase, can sufficiently lower the content of antinutritive compounds, such as at least one of the compounds vicine and convicine, in a liquid crop-based composition. This decreases the risk that an individual that consumes the liquid crop-based composition suffers adverse reactions, such as favism. The method further allows the use of a wide variety of different crops including in particular variants of fava beans that do not, like the Divine fava bean cultivar, have naturally low contents of antinutritive compounds such as vicine and convicine. This allows the crop to be used in the method to be chosen on other properties, such as ease of farming and price, than its content of antinutritive compounds.

Further, the technology proposed herein is based on the surprising effect that rinsing of a crop with warm liquid, having temperature of 50-90°C, not only results in a sufficient decrease of antinutritive compounds such as vicine and convicine, but also impoves the flavor of the end product. In contrast to using a combination of fermentation and enzymation, the technology proposed herein by way of the rinsing step leads to a neutral pH of the end product which makes the liquid crop-based composition easier to process further. Moreover, by rinsing instead of fermentation, the prepared liquid crop-based composition obtains a better color, which makes the end product more appealing to the consumer. Additionally, the rinsing step provides for obtaining higher dry matter contents such as up to 17%-25% in the obtained composition.

The method may be applied on the pre-peeled or dehulled crops. The pre-peeling may be performed by mechanical or chemical means. The method may alternatively be applied on unpeeled crops, which as advantageous due to decreased raw material spill and waste, and, therefore, environmental footprint. A higher rinsing temperature, such as at least 60°C, generally obviates the benefit and need of pre-peeling and dehulling.

Additionally, the technology proposed herein is based on the recognition that, whereas some crops, such as fava beans, generally contain a high content of vicine and convicine and a low content of the divicine and isouramil, typical or conventional food processing technologies, such as heat treatments for reasons of microbial control or other biological or enzymatic process steps, may in fact cause the degradation of the vicine and convicine. This degradation results in the formation of divicine and isouramil. Accordingly, a liquid crop-based composition that has been prepared using typical or conventional food processing technologies may end up containing a higher amount of the more potent compounds divicine and isouramil than the crop itself.

Further, the technology proposed herein is based on the recognition that the compounds divicine and isouramil are significantly, i.e., about 30 times, more potent in causing favism than their source compounds vicine and convicine, and that divicine and isouramil in low oxygen environments, such as in a liquid crop-based composition, do not spontaneously decompose rapidly. It was instead found that the levels of divicine and isouramil, when present in a fava bean composition, remained substantially constant after enzymation and in storage. This revealed the need for significantly reducing these compounds in the enzymation process, as achieved by the method according to the first aspect of the technology proposed herein in which the crops are subjected to rinsing with an aqueous liquid at temperatures of 50-90°C, and the liquid crop-based composition is subjected to enzymation to obtain a sufficient reduction of all four compounds. Thus, by the method according to the first aspect of the technology proposed herein it is achieved that both the compounds vicine and convicine, which are metabolized to divicine and isouramil in the body, and any divicine and isouramil that have already formed in the liquid crop-based composition during processing, are reduced.

The term preparing is to be understood as encompassing the terms treating, producing, and making.
The term liquid crop-based composition is intended to encompass compositions comprising liquid and crops, such as fava beans. A liquid crop-based composition may thus for example comprise or consist of an aqueous liquid and crops which preferably are crushed or milled. A liquid crop-based composition involves that the crop is present in a low-oxygen or anaerobic environment due to the liquid. The present inventors have found that antinutritive compounds, particularly divicine and isouramil, break down slowly in such an environment. Preferably a liquid crop-based composition comprises crushed or milled crops in a suspension or liquid such as water. The crops may be crushed or milled or disintegrated to particles less than 5 mm in diameter, such as less than 3 mm, less than 1 mm, or less than 0.5 mm.
The term liquid encompasses that the liquid crop-based composition is not solid, and preferably encompasses that the liquid crop-based composition is pourable. The liquid crop-based composition can have allow or high viscosity.
The liquid crop-based composition may further comprise other foodstuffs, such as for example cereals (for example oats). Accordingly, it must be understood that other foodstuffs may be included in, or added to, the crop and/or the liquid crop-based composition before, during, and after the steps of the method.

The term crops encompasses food crops harvested for human consumption. One example of the crops concerned is fava bean, which encompasses the terms *Vicia faba*, broad bean and faba bean.

It is understood that rinsing may be continuous, or semicontinuous. Rinsing may encompass filling a container with a liquid. The mixing container may for example be provided with a stirrer and/or devices for heating and/or cooling the contents of the container. The container may be the same container as used in the subsequent steps, or a different container. The crops may be provided to the container after or before filling the container with the liquid. The rinsing step further encompasses letting the liquid cleanse the crops by flushing. In other words, rinsing means irrigating the crops with the liquid. The liquid may be allowed to affect the crops a longer time, such as 12-24 hours. The liquid may be allowed affect the crops a shorter time, such as 2-7 hours, such as at least 3 hours, such as at least 6 hours. The duration of the affecting time may be predetermined. The duration of the rinsing step, may be adapted during the rinsing step. Such adaption may be based on verification test perfomered on the crops or liquid during the rinsing step.
Preferably the rinsing step i comprises rinsing the crop for at least 3 hours, preferably at least 6 hours.

The liquid may be a flowing liquid, which means that the crops are surrounded by different water portions throughout the step. The liquid may be idle or inert, meaning that the same liquid is present in the container throughout the step, i.e. the liquid is not replaced. The liquid may be alternatively be replaced partly, fully, or continuously during the rinsing step.
The specified temperature of the liquid in the rinsing step i may be achieved before the liquid is added to the crops. The temperature of the liquid may be achieved after the crops are mixed with the liquid. The temperature may vary throughout the step. If the step comprises different steps, the temperature may vary between the different steps. The rinsing step may comprise several independent steps, wherein the replaced volume of the liquid may differ between the steps. The steps may have different durations. The duration of the rinsing step may vary depending on the temperature of the liquid and/or requirement on the reduction of the four compounds.
It is understood that the expression "aqueous liquid" means that the liquid contains water.

Although preferable for obtaining a reduction of antinutritive compounds, it is contemplated within the context of the technology proposed herein that the rinsing step (i) can be removed from the method and the method thus be performed without rinsing step (i). As seen in Method/sample 3 of Example 2, such a method achieves a significant reduction of vicine and convicine.

The term "disintegrating" means breaking or decomposing into constituent elements, parts, or small particles. Thus, the crop may be divided into smaller parts by e.g., milling or crushing.

The liquid crop-based composition may be subjected to the amylase for example in a mixing tank or enzymation reactor. The mixing tank or enzymation reactor may for example be provided with a stirrer and/or devices for heating and/or cooling the contents of the mixing tank or reactor. It is understood that amylase is any of a group of enzymes (such as amylopsin) that catalyse the hydrolysis of starch and glycogen or their intermediate hydrolysis products.
Accordingly, subjecting encompasses bringing into contact with and/or mixing with. The amylase may be added to the liquid crop-based composition as a separate step, or as a part of the disintegrating step (ii).

The liquid crop-based composition may be subjected to the betaglucosidase for example in a mixing tank or enzymation reactor. The mixing tank or enzymation reactor may for example be provided with a stirrer and/or devices for heating and/or cooling.

The dosage of betaglucosidase, i.e., the amount of betaglucosidase that is added to the liquid crop-based composition, is dependent on the desired time for the enzymation, the temperature during the enzymation, the amount of liquid crop-based composition (and its dry matter content) to be processed, and the activity of the enzyme. Generally, this dosage should be at least 0.05 wt% based on the amount of liquid crop-based composition that is to be processed. The dosage is preferably from 0.1 to 1 wt% when preparing a liquid crop-based composition having a dry matter content of 9 wt% using a betaglucosidase with an activity of 1500 AZO BBG U/g or alternatively at least 6200IU/g. The dosage may be proportionally decreased or increased when a betaglucosidase having a higher, respectively a lower, activity is used. The dosage may further be proportionally decreased or increased when the dry matter content of the liquid crop-based composition is lower or higher. However, instead of decreasing or increasing the dosage, the time or temperature conditions may be proportionally decreased or increased.
The activity of the enzyme may be at least 1500 AZO BBG U/g or alternatively at least 6200IU/g. If the activity of the enzyme is increased, the dosage may be correspondingly decreased, and vice versa.
Betaglucosidase as used herein encompasses both solutions of betaglucosidase, such as a 15-20 Wt% of betaglucosidase in solution, as well as isolated (100 wt%) betaglucosidase. Where a solution with a higher concentration of betaglucosidase, or isolated betaglucosidase is used, and the activity correspondingly increases, the dosage is preferably correspondingly decreased. Accordingly, the dosage, based on the weight of isolated betaglucosidase used, may be from may be from 0.01 wt%, such as 0.02 to 0.2 wt%.
Betaglucosidase encompasses any enzyme having the function of a betaglucosidase, i.e., that of hydrolysing glycosidic bonds to terminal non-reducing residues in glucosides and oligosaccharides, with release of glucose.
The betaglucosidase may be an enzyme complex hydrolysing beta glucans and non-starch polysaccharides like arabinoxylans. The betaglucosidase may preferably be a cellulase produced by fermentation with *Trichoderma reesei.*
For the enzymation with betaglucosidase, the temperature condition is generally from 40-65°C, preferably 65 °C, and the time conditions are typically 2 to 12 hours, preferably 2 hours.

The first time period, and the first dosage, time and temperature conditions are to be selected so that the content of the at least one antinutritive compound is reduced. Generally, a higher temperature increases the reaction rate of the reaction. With an increased reaction rate the time needed for obtaining the sufficient reduction decreases, whereas a lower temperature requires longer time to obtain the sufficient reduction. Likewise, an increased dosage decreases the time needed to obtain the sufficient reduction. The time and temperature conditions refer to the time that the betaglucosidase is in contact with the liquid crop-based composition and capable of enzymatically affecting the liquid crop-based composition, as well as the temperature of the reaction mixture of the liquid crop-based composition and the betaglucosidase during the reaction, i.e., during step (iv).

The first time period, and the first dosage, time and temperature conditions may be selected so as to be sufficient to reduce the content of both of the compounds vicine and convicine, and preferably also both of the compounds divicine and isouramil, by at least 90 wt% as compared to the content of said compounds in a crop provided in step i.
Preferably the first time period, and the first dosage, time and temperature conditions are selected so as to be sufficient to reduce the sum content of the compounds vicine and convicine, and preferably also the sum content of the compounds divicine and isouramil, by at least 90 wt% as compared to the content of said compounds in the crop provided in step i.
More preferably the first time period and the first dosage, time and temperature conditions are selected so as to be sufficient to reduce the sum content of the compounds vicine, convicine, divicine, and isouramil, by at least 90 wt% as compared to the content of said compounds in the crop provided in step i. The reduction may preferably be at least 94 wt%, 95 wt% or more, such as 96, 97, 98, 99, 99.5, 99.9, 99.95, 99.99 wt%.

A further advantage of the rinsing in step (i) is that it provides a heat treatment of the crop for reducing the microbial content or for sterilizing the liquid crop-based composition. Alternatively, the method may further comprise a step of heat treating the crop or the liquid crop-based composition for reducing the microbial content of the liquid crop-based composition or for sterilizing the liquid crop-based composition. The heat treatment may comprise pasteurizing, UHT treatment, and/or autoclaving.

Further the method may also comprise a step of reducing the microbial content of the crop or the liquid crop-based composition, or sterilizing the liquid crop-based composition, using irradiation sterilisation or gas sterilisation.

Thus, other methods for reducing the microbial content or for sterilizing the liquid crop-based composition may also be utilized together with, or instead of, heat treatment.

Preferably the crop provided in step i comprises dehulled fava beans. As seen in Method/sample 4 of Example 2, dehulling further lowers the content of antinutritive compounds.

Several crops, such as fava beans, contain about 11% water, corresponding to a dry matter content of about 98%. Hence the amount of added aqueous liquid can be configured to obtain the listed dry matter contents. The weight ratio of crops to added water (weight of crops : weight of water) may for example be from 9.5:1 to 1:9.5, such as from 9:1 to 1:9. Preferably the weight ratio may be from 3:1 to 1:3. The dry matter content may be 2% to 88%, such as from 5 to 50%.
More preferably step ii comprises mixing the disintegrated crop with an amount of aqueous liquid configured to provide a liquid crop-based composition with a dry matter content of from 5 to 25%, preferably 5 to 15 %, such as 7 to 12 % or 8 -10%. These dry matter contents are efficient in providing nutritious liquid crop-based composition.

The method may further include a step of:
v) inactivating the enzyme activity of the amylase, such as by heat denaturing the amylase, prior to performing step iv.
This is advantageous in that it decreases the risk that the amylase and the betaglucosidase react with each other.

Preferably the first time period, and the first dosage, time and temperature conditions are selected so as to be sufficient to obtain a sum content of vicine and convicine, calculated as 1.5*content of convicine + content of vicine, in the liquid crop-based composition that is less than or equal to 360 mg, preferably less than 360 mg, such as less than 150 mg, more preferably less than 100 mg, per kg of the liquid crop-based composition. The sum content is more preferably less than 50 mg, such as less than 35 mg, per kg of the liquid crop-based composition. These contents have been shown to be safe.

Additionally, or alternatively, the first time period, and the first dosage, time and temperature conditions are selected so as to be sufficient to obtain a ratio of content to dry matter, calculated as (1.5*content of convicine + content of vicine) / dry matter content %, that is less than or equal to 4.06 mg, preferably less than 4.06 mg, more preferably less than 3 mg, per percent dry matter. These ratios ensure a sufficiently low content of convicine and divicine while maintaining suitable the nutritious properties of the liquid crop-based composition.

Preferably the amylase comprises one or more, preferably two, selected from the group consisting of alpha-, beta- and gamma-amylase. Accordingly, the amylase may comprise both alpha amylase and beta amylase. The alpha amylase may have an activity of for example 480 KNU-B/g and the beta amylase may have an activity of for example 5000 BAMU/g. The dosage of the alpha amylase may be from 0.001 to 0.002, such as 0.0015 wt% in relation to the weight of the liquid crop-based composition. The dosage of the beta amylase may be 0.005 to 0.02, such as 0.01 wt% in relation to the weight of the liquid crop-based composition.

The amylase used in the method may be one of the group of Alpha-, beta- and gamma-amylase. Each of the types of the amylase acts on different parts of the carbohydrate molecule. Alpha-amylase can be found in humans, animals, plants, and microbes. Beta-amylase is found in microbes and plants. Gamma-amylase is found in animals and plants.

The liquid crop-based composition is preferably subjected to the amylase under second dosage, time, and temperature conditions such that the starch content, compared to the starch content of liquid crop-based composition obtained in step (ii), is reduced by at least 50%, preferably at least 90%, more preferably at least 95%.

The second dosage condition is preferably at least 0.001 wt%, such as from 0.001 wt% to 0.1 wt%, such as from 0.0015 wt% to 0.02 wt%, the second time condition is preferably at least 15 minutes, such as from 15 min to 60 min, such as 30 min to 60 min, such as 30-45 min or 45-60 min, and, the second temperature condition is preferably at least 50 °C, such as 50-80°C, such as 50-70°C, such as 60 °C.

Preferably the first dosage condition is at least 0.1 wt% betaglucosidase per kg liquid crop-based composition, the first time condition is at least 2 hours, and the first temperature conditions is at least 60 °C. Preferably the first dosage is from 0.1 wt% to 1 wt%, such as from 0.15 wt% to 1 wt% or from 0.25 wt% to 1 wt% such as from 0.25 wt% to 0.5 wt%. The activity of the betaglucosidase is preferably 1500 AZO BBG U/g or alternatively at least 6200IU/g.

Preferably the crop and/or the aqueous liquid is agitated during the rinsing step i. It is further understood that the expression "agitate" encompasses moving the liquid and the crop vis-à-vis each other, preferably with irregular, rapid, or violent movements.

Preferably the crop and/or the aqueous liquid is agitated by using a mechanical stirrer, such as a helical screw, and/or by a flow of the aqueous liquid. More preferably the crop and the aqueous liquid is agitated using a helical screw.

The method may further comprise the step of collecting a solid fraction of the liquid crop-based composition, such as by decanting, thus defining a liquid and a sold fraction of the liquid crop-based composition.
The solid fraction may be used for different purposes, such as (a part of) a meat substitute.

A second aspect of the technology proposed herein further concerns a liquid crop-based composition obtained by the method according to the first aspect of the technology proposed herein.
The liquid crop-based composition is characterized in that it has a reduced content of at least one antinutritive compound such as vicine and convicine.

A third aspect of the technology proposed herein further concerns a method of manufacturing a food product or a feed product comprising using the liquid crop-based composition according to the second aspect of the technology proposed herein.
A wide variety of food products and feed products may be produced from the liquid crop-based composition processed according to the method. The liquid crop-based composition may be a major part of such products, or alternatively it may be a minor part of the products.

The method according to third aspect of the technology proposed herein may further comprise any of:
vi) adding the liquid crop-based composition, or a liquid fraction thereof or a solid fraction thereof, to an oat-derived or oat-comprising composition,
vii) using the liquid crop-based composition, or a liquid fraction thereof or a solid fraction thereof, to produce an ice-cream, a whippable cream, or a beverage, and
viii) using a solid fraction of the liquid crop-based composition to produce a meat substitute.

This provides suitable food products comprising crop-based compositions. The solid fraction may further be used to produce a feed product.

A fourth aspect of the technology proposed herein further concerns a food product or feed product obtained by the method according to the third aspect of the technology proposed herein.
The food product or feed product may for example be in the form of an ice-cream, whippable cream or beverage. The food product or feed product is characterized in that it has a reduced content of at least one antinutritive compounds, such as vicine and convicine.

### BRIEF DESCRIPTION OF THE FIGURES AND DETAILED DESCRIPTION

A more complete understanding of the abovementioned and other features and advantages of the technology proposed herein will be apparent from the following detailed description of preferred embodiments in conjunction with the appended drawings, wherein:

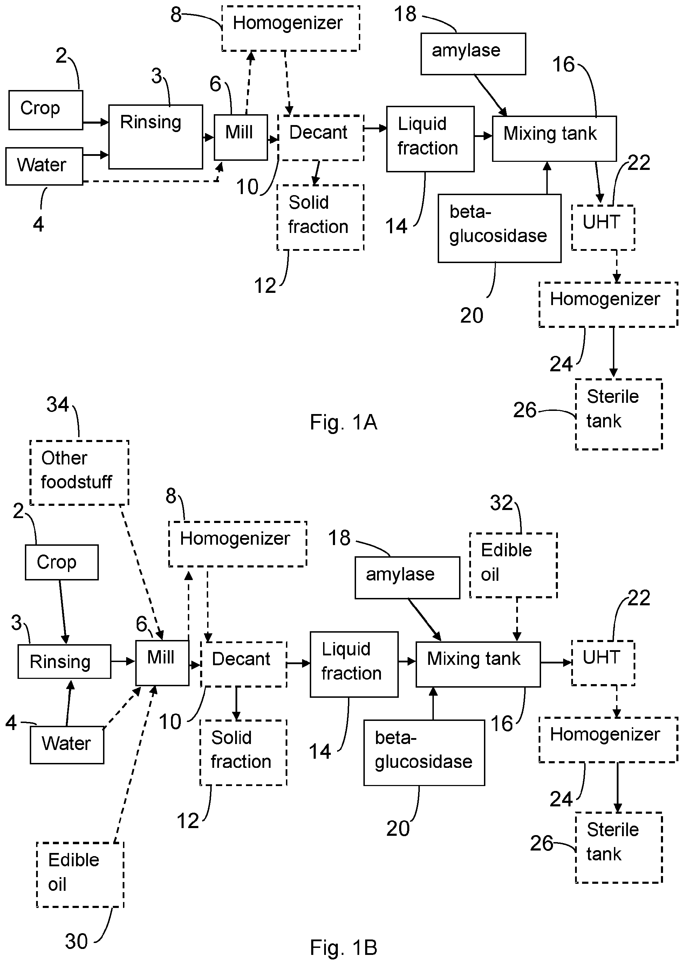

- Fig. 1A: shows a first embodiment of the method of preparing a liquid crop-based composition according to the first aspect of the technology proposed herein,
- Fig. 1B: shows a second embodiment of the method of preparing a liquid crop-based composition according to the first aspect of the technology proposed herein.

In the below description of the figures the same reference numerals are used to designate the same features throughout the figures. Further, where present a 'added to a reference numeral indicates that the feature is a variant of the feature designated with the corresponding reference numeral not carrying the '-sign.

Fig. 1A shows a first embodiment of the method of obtaining a liquid crop-based composition according to the first aspect of the technology proposed herein. The crops 2 are rinsed with water 4, which has a temperature of 50-90°C. The rinsing 3 may last for 2.5 hours. The duration of the rinsing may also be prolonged to last 3-12 hours (such as for 3 hours or 6 hours). As shown in the figure, the rinsed crops 2 and if necessary further water 4, is admitted to a mill 6 in which the rinsed crops are milled and finely divided together with the water. The crops are disintegrated to particles less than 5 mm in diameter. The milling in the mill 6 may take place at any suitable temperature. Typically, the temperature is at least 20 °C. The temperature may be higher, such as at least 70°C or 90°C, for example 95°C temperature. The milling continues until of the crops 2 have been reduced in size to the size provided by the mill 6, i.e., less than 5 mm diameter. The mixture of milled crops , i.e., the crop material, and water is hereinafter referred to as a liquid crop-based composition. The liquid crop-based composition here has a dry matter content of about 9 wt%. The liquid crop-based composition may optionally, after the mill 6, be homogenized in a homogenizer 8 at elevated pressure and temperature, for example at more than 70 °C or more than 80 °C and at more than 100 bar or any other pressure suitable to further disintegrate the crop material in the crop-based composition and to increase the degree of extraction of the nutrients (carbohydrates, proteins, minerals, vitamins, etc.) from the crops material. The liquid crop-based composition is then optionally decanted in decanter 10 for separating out a solid fraction 12 of the liquid crop-based composition. This solid fraction 12 may be used as described further below.
The remainder of the liquid crop-based composition 14, also called the liquid fraction, is transferred into a mixing tank 16. Here an amylase 18 at a dosage of at least 0.001 wt% is added to at least partially degrade starch in the liquid crop-based composition for a time of for example 45 minutes at a temperature of for example 60 °C. Following an optional inactivation of the amylase, and in order to reduce the content of the antinutritive compounds, such as vicine, divicine, convicine and isouramil in the liquid crop-based composition 14, a betaglucosidase enzyme 20 is added to the mixing tank 16. The addition of the betaglucosidase enzyme 20 is typically 0.1 to 1 wt% of the crop-based composition and the enzyme is allowed to process the liquid crop-based composition 14 for about at least 1 hour, such as for example 2-4 hours at a temperature of 40-70 °C, for example from 55 to 65 °C, at which the enzyme is active. The enzyme may, as here, be provided as a solution containing 20 wt% enzyme, whereby the dosage of 0.1 to 1 wt% refers to the enzyme solution and corresponds to 0.02 to 0.2 wt% of isolated enzyme being added.
The so treated liquid crop-based composition comprises a reduced content of at least one of the compounds vicine and convicine.
Optionally, to reduce the microbial content, the liquid crop-based composition 14 may for example be heat treated, for example as illustrated here using a UHT device 22 wherein it is heat treated at temperatures above 100 °C for sufficient time.
If the betaglucosidase and the amylase is not inactivated in the UHT device 20, then the enzyme activity may be deactivated in the mixing tank 16, after the enzymation process has concluded by cooling the mixing tank 16 to a temperature below room temperature, or alternatively be heating the mixing tank 16 to a temperature sufficient to cause heat denaturing of the enzymes. Finally, the liquid crop-based composition may be homogenized in a second homogenizer 24 before being stored, for example in a sterile tank 26, or used further. The liquid crop-based composition 14 so obtained may be used as a substitute to cream and whipping cream, as a base for soups etc. The solid fraction 12 may be used as a meat substitute. Both the solid fraction 12 and the liquid crop-based composition 14 contain reduced contents of antinutritive compounds such as vicine and divicine compared to the crops 2 in the beginning of the process.

Although in fig 1A only the liquid crop-based composition 14 enters the mixing tank 16 to be subjected to the amylase and the betaglucosidase 18 and 20, it is also possible to position the decanter 10 after the mixing tank 16 such that the enzymation using the enzymes is performed on the liquid crop-based composition prior to the optional separation of the solid fraction 12 from the liquid crop-based composition 14.

Additionally, the amylase 18 may be added earlier in the process, such as in the mill 6. This is advantageous as the retention time in the process provides the amylase 18 with the time needed to at least partially degrade the starch in the liquid crop-based composition 14 prior to the betaglucosidase 20 being added, and thereby decreases the risk for interaction between the amylase 18 and the betaglucosidase 20without having to inactivate the enzymatic activity of the amylase 18 in the mixing tank 16.

Further, whereas fig 1A (and 1B below) show and describe the use of a number of devices and steps, including the mill 6, the homogenizer 8, decanter 10, UHT device 22, homogenizer 24, sterile tank 26, which are advantageous, these devices and steps are not essential for achieving the objects of the technology described herein.

Fig. 1B shows a second embodiment of the method of obtaining a liquid crop-based composition according to the first aspect of the technology proposed herein. This embodiment differs in addition of different further nutrients to the liquid crop-based composition. Accordingly, in certain cases, it may be desired to further adjust or increase the nutritious properties of the crop-based composition. Edible oil, such as rape seed oil, may in particular be added to the mixing tank upon conclusion of the enzymation.This option is illustrated in Fig. 1B by the addition of edible oil 30 either in the beginning of the process, or the addition of edible oil 32 to the mixing tank 16. Edible oil may additionally be added at other steps of the method.
Other foodstuffs may also be added to the liquid crop-based composition. One example is oats and other cereals. Foodstuffs may in particular be added prior to or together with the addition of the enzymes (amylase and/or betaglucosidase) for example as indicated by 34 in Fig. 1B.

### EXAMPLE 1 - Determination of generally safe levels of Vicine and Convicine

According to the initially identified papers by Duc G et al and Gallo V et al, the fava bean cultivar Divine does not produce symptoms of favism when consumed at an amount of 500 g raw beans per 70 kg body weight. The Divine cultivar contains 0.16 g vicine and convicine per kg wet weight. The typical value for general fava bean cultivars is 4.75 g vicine and convicine per kg wet weight, and Gallo et al also found that this amount of vicine and convicine did produce symptoms of favism. The ratio between the divine cultivar and the general fava bean cultivar thus becomes (0.16 / 4.7) = 0.034.

In order to account for differing dry matter contents, the present inventors disintegrated beans of the Divine cultivar in order to obtain a paste. Further analysis showed that the paste had a dry matter content of 88.6% and contained 360 mg/kg of vicine and undetectable amounts of convicine.

In order to account for differing toxicity between vicine and convicine, the present inventors then considered the monograph: "Toxicants of Plant Origin, Vol 2 Glycosides" by Petter R. Cheeke published 2020. This work shows that the LD50 value in rats and the non-toxic dosage of vicine is generally 1.21-1.5 times that of convicine, i.e. convicine is more toxic than vicine. From this work a factor of 1.5 can be determined, whereby the content of convicine is to be multiplied by 1,5 and summed with the content of vicine to determine a combined value of vicine and convicine.

Accordingly, a product ready for consumption should have a total amount of vicine and convicine, calculated as 1.5*content of convicine + content of vicine that is less than 360 mg/kg product.

The concentration of convicine and vicine in a liquid composition will depend on the dry matter content. A low dry matter content of fava beans will thus result in a liquid composition having a low content of vicine and convicine, however, such a composition would have a correspondingly low nutritional value. Accordingly, the present inventors defined a dry matter independent value for the combined content of vicine and convicine expressed as the ratio of (1.5*content of convicine + content of vicine) / %TS. Applying this formula to the results obtained for the Divine cultivar bean paste and noting that the paste did not contain any detectable amounts of convicine, yielded a value of (360)/88.6 = 4.06. Accordingly, a product ready for consumption should therefore preferably have a ratio of (1.5*content of convicine + content of vicine) / %TS that is equal to or lesser than 4.06 in order to be both safe and nutritious.

### EXAMPLE 2 - Preparing liquid crop-based compositions

Table 1 discloses the results obtained on reducing the content of vicine, divicine, convicine and isouramil in a liquid crop-based composition, in this case a liquid fava bean-based composition, dependent on the treatment method used.

The content of the compounds was determined as follows.
Vicine and convicine were determined as based on the method described by Gutierrez et al: CAPs markers to assist selection for low vicine and convicine contents in faba bean (Vicia faba L.). Theor. Appl. Genet. 2006. The samples were extracted with water in a hot water bath for 3.5 hours, after which concentrated HCI was added to the sample extracts. Samples were analyzed by an Agilent 1100 series high performance liquid chromatography device with a diode array detector (HPLC-DAD). A C18 column was used with a gradient of phosphate buffer and methanol. The breakdown products divicine and isouramil were identified by their UV-spectra and quantitated using a calibration curve of vicine and correcting the result by molar mass ratio.

For Method/samples no. 2-4, the respective methods were carried out as described in table 1, and samples for the analysis above were collected about 24 hours after conclusion of the enzymation.The collected samples were then frozen, stored for 1-2 weeks, and then thawed before being extracted with water and further prepared for analysis as described above.
The results listed in table 1 are typical values from several runs of each of the respective methods (sample no. 2-3), and from several samples collected from each run.

**Table 1**

| Sample no. | Method/sample | Contents and comment |
|---|---|---|
| 1 | Freshly harvested fava bean | In total about 10740 mg/kg of convicine and vicine. |
| | | Reference value for a non-processed fava bean. Divicine and isouramil are degradation products/metabolites of convicine and vicine, and therefore not present in any significant amount in the fava bean. |
| | | From comparison with Example 1 it can be noted that the content of convicine and vicine is clearly above the generally safe level of 360 mg/kg. |
| 2 | Liquid fava bean-based composition as formed according to fig. 1A but without the rinsing and enzymation step. | 360 mg/kg of convicine |
| | | 791 mg/kg of vicine |
| | | Less than 2 mg/kg of divicine and isouramil |
| | | The liquid fava bean-based composition comprises a lower content of convicine and vicine compared to the freshly harvested fava bean. This is due to the dilution effected by the addition of the water 4. In this case the ratio of fava bean: water was about 1:9, i.e. about 10% dry matter content. Although the content of convicine and vicine has been reduced compared to the freshly harvested fava bean, it however needs to be further reduced as it is above the generally safe level of 360 mg/kg established in Example 1. |
| | The temperature of the liquid crop-based composition during preparation was about 90 °C. | |
| 3 | The liquid fava bean-based composition obtained as shown in fig 1A, i.e., using only enzymation, but without rinsing step | 5 mg/kg of convicine |
| | | 68 mg/kg of vicine |
| | | divicine could not be detected (less than 2 mg/kg) isouramil could not be detected (less than 2 mg/kg) |
| | The temperature of fava bean composition in the steps up to the enzymation was about 90 °C. | This process provides a significant reduction of convicine and vicine. No divicine or isouramil could be detected in the fava bean composition. |
| | | The sum content of vicine and convicine for comparison with the levels obtained for the Divine fava cultivar is (68 mg/kg + 5*1.5 mg/kg) = 75.5 mg/kg and thus within the generally safe level of 360 mg/kg established in Example 1. The dry matter content was 10%. |
| | A first enzymation step comprised simultaneous addition of 0.0015 wt% alpha amylase (activity 480 KNU-B/g) and 0.01 wt% | |
| | beta amylase (Activity 5000 BAMU/g) for 45 min at 60 °C. | The ratio of content to dry matter could thus be determined to (1.5*5mg/kg + 68 mg/kg)/10 = 7.55 mg per percentage dry matter |
| | The second enzymation step comprises addition of 0.25 wt% betaglucosidase (activity of 1500 AZO BBG U/g or 6200IU/g) for 2 hours at 60 °C) | The liquid fava bean-based composition is thus safe to consume but is less preferable with respect to the dry matter content percentage as the ratio of 7.55 is above the ratio for the Divine fava bean cultivar. |
| | Between the first and second enzymation steps the alpha and beta amylase was deactivated by heating the liquid fava bean-based composition to 95 °C. | |
| 4 | The liquid fava bean-based composition obtained as in fig. 1A using both rinsing and enzymation. | Dehulled fava beans: |
| | | 10 mg/kg of vicine |
| | | 11 mg/kg of convicine |
| | | Non-dehulled fava beans: |
| | Rinsing for 6 hours at 40-60 °C | 11 mg/kg of vicine |
| | | 20 mg/kg of convicine |
| | Enzymation as in Method/sample 3 above. | No divicine or isouramil was detected. |
| | | For dehulled fava beans, the sum content of vicine and convicine for comparison with the levels obtained for the Divine fava cultivar is 11*1.5 mg/kg + 10mg/kg) = 26.5 mg/kg and thus within the generally safe level of 360 mg/kg established in Example 1. The dry matter content was 10%. The ratio of |
| | | content to dry matter could thus be determined to (1.5*11 mg/kg + 10 mg/kg)/10 = 2.65 |
| | | For non-dehulled fava beans the sum content of vicine and convicine was (1.5*20 mg/kg + 11 mg/kg) = 41 mg |
| | | The ratio was (1.5*20 mg/kg + 11 mg/kg) / 10 = 4.1 per percentage dry matter. These values show a liquid fava bean-based composition that is safe to consume, and that has a ratio of content to dry matter that is below (2.65) or similar (4.10) to the ratio of content to dry matter percentage obtained for the Divine fava bean cultivar. |

As shown, the addition of the rinsing step further decreased the content of convicine and vicine. Dehulling of the fava beans decreased the content even further.

## Claims

1. A method of preparing a liquid crop-based composition for use as a food, the method comprising the steps of:
i) rinsing a crop, such as fava beans, comprising at least one antinutritive compound, with an aqueous liquid for a first time period, wherein the aqueous liquid has a temperature of 50-90°C, such as 50-70°C, such as 60°C,
ii) disintegrating the rinsed crop, such as by milling or crushing, and mixing with an aqueous liquid to obtain a liquid crop-based composition,
iii) subjecting the liquid crop-based composition to an amylase so as to at least partially degrade starch in the liquid crop-based composition, and
iv) subjecting the liquid crop-based composition to a betaglucosidase under first dosage, time, and temperature conditions so as to reduce the content of the at least one antinutritive compound.

2. The method according to any preceding claim, wherein the crop provided in step i comprises dehulled fava beans.

3. The method according to any preceding claim, wherein step ii comprises mixing the disintegrated crop with an amount of aqueous liquid configured to provide a liquid crop-based composition with a dry matter content of from 5 to 25%, preferably 5 to 15 %, such as 7 to 12 % or 8 -10%.

4. The method according to any preceding claim, further comprising the step of:
v) inactivating the enzyme activity of the amylase, such as by heat denaturing the amylase, prior to performing step iv.

5. The method according to any preceding claim, wherein the first time period, and the first dosage, time and temperature conditions are selected so as to be sufficient to obtain a sum content of vicine and convicine, calculated as 1.5*content of convicine + content of vicine, in the liquid crop-based composition that is less than or equal to 360 mg, preferably less than 360 mg, more preferably less than 100 mg, per kg of the liquid crop-based composition.

6. The method according to any preceding claim, wherein the first time period, and the first dosage, time and temperature conditions are selected so as to be sufficient to obtain a ratio of content to dry matter, calculated as (1.5*content of convicine + content of vicine) / dry matter content %, that is less than or equal to 4.06 mg, preferably less than 4.06 mg, more preferably less than 3 mg, per percent dry matter.

7. The method according to any of the preceding claims, wherein the amylase comprises one or more, preferably two, selected from the group consisting of alpha-, beta- and gamma-amylase.

8. The method according to any of the preceding claims, wherein liquid crop-based composition is subjected to the amylase under second dosage, time, and temperature conditions such that the starch content, compared to the starch content of liquid crop-based composition obtained in step (ii), is reduced by at least 50%, preferably at least 90%, more preferably at least 95%.

9. The method according to any preceding claim, wherein the second dosage condition is at least 0.001 wt%, the second time condition is at least 30 minutes, and the second temperature condition is at least 50 °C.

10. The method according to any of the preceding claims, wherein the first dosage condition is at least 0.1 wt% betaglucosidase per kg liquid crop-based composition, the first time condition is at least 2 hours, and the first temperature conditions is at least 60 °C.

11. The method according to any of the preceding claims, wherein the crop and/or the aqueous liquid is agitated during the rinsing step (i).

12. The method according claim 11, wherein the crop and/or the aqueous liquid is agitated by using a mechanical stirrer, such as a helical screw, and/or by a flow of the aqueous liquid.

13. A liquid-crop-based composition obtained by the method according to any of the preceding claims.

14. A method of manufacturing a food product or a feed product comprising using the liquid crop-based composition according to claim 13.

15. A food product or feed product obtained by the method according to claim 14.
